# EUROPÄISCHE PATENTSCHRIFT

(11) **EP 0 493 703 B1**
(45) Veröffentlichungstag und Bekanntmachung des Hinweises auf die Patenterteilung: **16.06.1993**
(21) Anmeldenummer: 91120968.2
(22) Anmeldetag: 06.12.1991
(51) Int. Cl.: H04M 3/50

(54) **Kommunikationssystem, insbesondere Fernsprechkommunikationssystem**
Communication system especially telephone communication system
Système de communication, en particulier système de communication téléphonique

(30) Priorität: 21.12.1990 DE 4041273
(43) Veröffentlichungstag der Anmeldung: 08.07.1992
(73) Patentinhaber: SIEMENS AKTIENGESELLSCHAFT, 80333 München (DE)
(72) Erfinder: Knitl, Reinhard, W-8000 München 60 (DE)

(56) Entgegenhaltungen:
- EP-A- 0 304 653
- EP-A- 0 319 282
- DE-A- 3 507 343
- US-A- 4 585 906
- US-A- 4 747 126

## Beschreibung

Moderne rechnergesteuerte Fernsprechkommunikationssysteme eröffnen eine Vielzahl von neuen Möglichkeiten bei der Benutzung des Telefons. Hierzu gehört beispielsweise die zeitversetzte Übermittlung von Sprachnachrichten, die jeweils in einem bestimmten Speicherbereich einer zentralen Speicheranordnung, der einem Teilnehmer fest zugeordnet ist, hinterlegt werden können. Die Sprachspeicherung und die verwaltete Übermittlung der individuellen Informationen kann sowohl im öffentlichen Telefonnetz als auch in Nebenstellenvermittlungssystemen realisiert werden. Ein Teilnehmer, dem ein Speicherbereich einer zentralen Speicheranordnung zugeordnet ist, kann für ihn hinterlegte Sprachnachrichten zu einem von ihm frei wählbaren Zeitpunkt abrufen. Neben dem Aufsprechen der einzelnen Nachrichten durch einen Absender und dem Abrufen durch den berechtigten Empfänger ist es möglich, die Nachrichten zu editieren. So kann beispielsweise der Absender bei der Eingabe der Nachrichten in den vorbestimmten Speicherbereich der zentralen Speicheranordnung die Nachricht ändern oder löschen. Dem Empfänger stehen ebenfalls verschiedene Möglichkeiten hinsichtlich für ihn hinterlegter Nachrichten zur Verfügung. So kann er für ihn hinterlegte Nachrichten in Teilen oder mehrmals abrufen, bestimmte Nachrichten auswählen, mit einer eigenen Nachricht verbinden und die ursprünglich hinterlegte Nachricht zu einem frei wählbaren Zeitpunkt löschen. Zur Bedienerführung bei dem Dialog zwischen einem Benutzer des Systems und dem System können auf Endgeräten darstellbare optische Informationen, Hinweise in gesprochener Form (sogenannte prompts) und Hinweistöne vorgesehen sein.

Ein derartiges Kommunikationssystem ist beispielsweise aus der deutschen Offenlegungsschrift DE 35 07 343 und aus dem US-Patent 4,585,906 bekannt. Das aus der letztgenannten Patentschrift bekannte Kommunikationssystem weist einen Tongenerator ("1152", Spalte 42, Zeilen 43 bis 61, Figur 25 b) auf, der der Erzeugung von Hinweistönen und von aus jeweils zwei Frequenzen bestehenden, sogenannten MFV (Mehrfrequenzverfahren)-Tonsignalen, dient.

Aus der deutschen Offenlegungsschrift 31 34 328 ist bereits ein Verfahren zum Betrieb eines PCM-Systems sowie zum Betrieb eines PCM-Signale speichernden Speichers bekannt. Dabei sind sogenannte Sonderdigits vorgesehen, die beliebige, von einem Anschlußbenutzer eingebbare Informationen, wie beispielsweise Markierungen, darstellen, welche bei Bedarf für sich einem Verbraucher zugeleitet werden.

Der Erfindung liegt das Problem zugrunde, ein Kommunikationssystem der eingangs genannten Art anzugeben, das eine hinsichtlich der Erzeugung von Hinweis- und Hörtönen sowie von Nachrichtenaustauschprotokoll-Steuerinformationssignalen vereinfachte schaltungstechnische Struktur aufweist.

Als wesentlich für die Erfindung ist anzusehen, daß sich in Kommunikationssystemen üblicherweise vorzusehende, eigenständige Tongeneratoreinrichtungen erübrigen.

Das Kommunikationssystem gemäß der Erfindung ermöglicht dem Betreiber die einfache Eingabe der unterschiedlichen Töne in das System. Diese Töne werden wie Sprachnachrichten eingegeben. Der Betreiber kann dabei die Töne hinsichtlich Frequenz, Dauer und Tonwechsel frei auswählen und bei Bedarf auch ändern. Systemintern werden die abgespeicherten Töne wie Sprachnachrichten behandelt, so daß für die Töne und Sprachnachrichten im wesentlichen nur dieselben Steuerprozeduren vorzusehen sind.

Nach einer weiteren vorteilhaften Ausführungsform der Erfindung sind in einem ersten zentralen Speicher Nachrichten (Nutzdaten wie Sprachnachrichten und/oder Fax-Nachrichten) in komprimierter Form abgespeichert, während Hinweistonsignale und/oder Datenaustauschprotokoll-Steuerinformationssignale in nichtkomprimierter Form abgespeichert sind. Damit wird einerseits hinsichtlich der üblicherweise großen Nutzdatenmengen durch die Komprimierung Speicherkapazität eingespart, während andererseits durch die Nichtkomprimierung der Tonsignale eine gegenüber der Komprimierung optimale Wiedergabequalität erzielt wird. Der Verzicht auf eine Komprimierung der Nachrichtenausstauschprotokoll-Steuerinformationssignale (MFV- bzw. DTMF-Signale) verhindert einen entsprechenden Informationsverlust und erhöht die Wahrscheinlichkeit für eine korrekte Auslösung der durch die Steuerinformationssignale bewirkten Prozeduren.

Nach einer weiteren vorteilhaften Ausführungsform der Erfindung ist vorgesehen, daß der Steuerung des Kommunikationssystems ein zweiter zentraler Speicher zugeordnet ist, der eine Hörtoneinrichtung bildet und in den Hörtönen (interne Ruftöne, Besetzttöne, Sondertöne, Sonderruftöne) darstellende Signale abgespeichert sind. Auch bei dieser Ausführungsform der Erfindung erübrigt sich eine eigenständige Hörtongeneratoreinrichtung.

Die Erfindung wird nun anhand der Zeichnungen näher beschrieben.

Es zeigen
Figur 1 ein Kommunikationssystem gemäß der Erfindung, und
Figur 2 die Vernetzung zweier Nachrichten austauschender Kommunikationssystemen nach Figur 1.

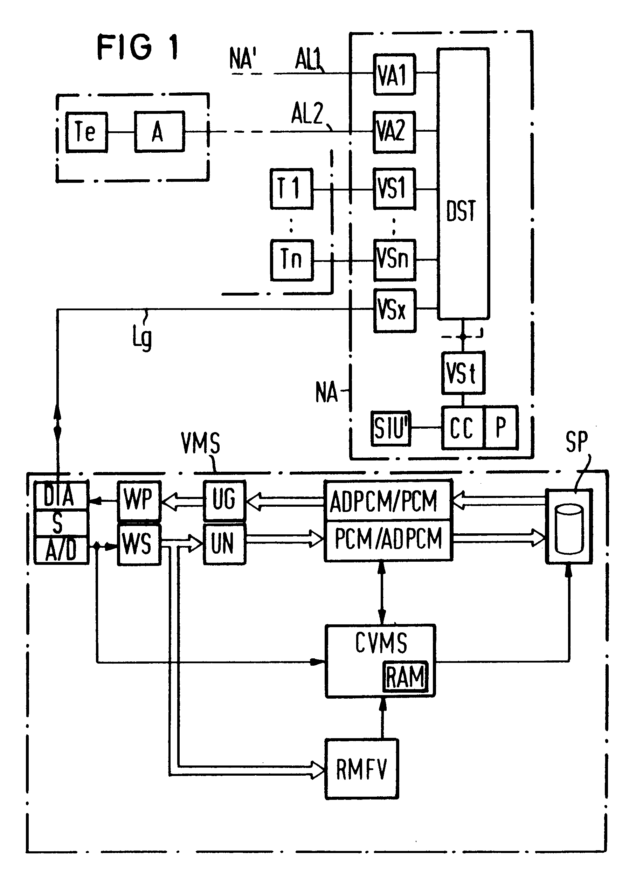

Die in Figur 1 in Form eines Blockschaltbildes schematisch dargestellte Nebenstellenanlage NA ist beispielsweise eine rechnergesteuerte und speicherprogrammierte Vermittlungsanlage. Die zentrale Steuereinrichtung CC steuert im wesentlichen die für die einzelnen Betriebsmöglichkeiten der Anlage erforderlichen Abläufe. Dabei greift sie auf entsprechende Programmteile zurück, die in der ihr zugeordneten Speichereinrichtung P abgespeichert sind. Mit VSt ist eine Verteilersteuerung und mit DST eine dezentrale Steuerung bezeichnet, der jeweils eine bestimmte Anzahl von Einrichtungen, wie beispielsweise Teilnehmerstellen Tl...Tn, zugeordnet sind. Sofern die Nebenstellenanlage NA als digitales Vermittlungssystem ausgestaltet ist, ist die dezentrale Teilsteuerung DST funktionsmäßig ein rechnergesteuerter Speicherbereich, in den digitale Sprachsignale eingespeichert und zum jeweiligen Verbindungspartner ausgelesen werden. Sie stellt also das digitale Koppelnetz dar. Die Einheit VSt ist eine Verteiler- und Anpassungssteuerung, die mehrere dezentrale Teilsteuerungen DST bedient, an die jeweils Sätze angekoppelt sind. So erfolgt beispielsweise die Anschaltung der Teilnehmerstellen Tl...Tn über die Sätze VSl...VSn. Über Amtsleitungsbündel bzw. über Amtsleitungen AL1 und AL2 ist die Nebenstellenanlage NA mit einem weiteren Kommunikationssystem NA' oder einer sonstigen externen Anlage, beispielsweise mit der Vermittlungsanlage A des öffentlichen Netzes, verbunden. Stellvertretend für die daran angeschlossenen Endgeräte ist die Teilnehmerstelle Te dargestellt. Den weiterführenden Leitungen AL1, AL2 bzw. weiterführenden Leitungsbündeln sind Vermittlungssätze VA1 und VA2 zugeordnet. Das Kommunikationssystem NA kann auch über eine sogenannte Querverbindung mit dem Kommunikationssystem NA' verbindbar sein. Die insgesamt dargestellten Vermittlungssätze VA1, VA2, VSl...VSn, VSx der Nebenstellenanlage können als aktive Sätze ausgebildet sein, die einen Prozessor beinhalten. Dieser kann Informationen vorverarbeiten, die z. B. von den in einem Teilnehmersatz enthaltenen Indikationsstellen geliefert werden. Beispielsweise kann vorgesehen sein, daß neben den im Regelfall vorgesehenen digitalen Endeinrichtungen auch analoge Endeinrichtungen über entsprechend ausgebildete Sätze angeschlossen sind. Es können also sowohl über Amtsleitungen als auch über Teilnehmeranschlußleitungen Verbindungen vermittelt werden, denen analoge Sprachinformationen zugrundeliegen.

Bei der in Figur 1 dargestellten Fernsprechnebenstellenanlage NA ist vorgesehen, daß sowohl in digitaler Form übermittelte Sprachinformationen als auch solche, die als analoge Sprachinformationen übermittelt werden, in einem über einen entsprechenden Satz VSx an die Anlage NA angeschlossenen Sprachspeichersystem VMS (Voice Mail Server) verarbeitet werden. In einer ersten zentralen Speichereinrichtung SP bzw. einem der Steuerung CVMS des Sprachspeichersystems VMS zugeordneten Arbeitsspeicher RAM werden jeweils für einen bestimmten oder für eine Gruppe von Teilnehmern bestimmte Sprachnachrichten abgespeichert. Dieser oder diese Teilnehmer haben dann die Möglichkeit, die Nachrichten gezielt abzufragen.

Sowohl beim Erstellen einer Nachricht als auch beim Abhören derselben stehen dem jeweiligen Teilnehmer verschiedene Bedienfunktionen zur Verfügung. Hierzu gehören beispielsweise Start/Stop der Ein- bzw. Ausgabe, Wiederholung der Nachricht, Vorlauf/Rücklauf, das Löschen und Ändern einer Nachricht.

Eine solche Sprachnachricht kann auch durch weitere Informationen, die beispielsweise die Identität des Absenders, den Zeitpunkt des Absendens usw. ergänzt sein. Sind im Speicher SP bzw. RAM Nachrichten für einen Teilnehmer hinterlegt, so kann ihm dies signalisiert werden. Für diese an sich bekannte zeitversetzte Art der Kommunikation, die mittels der zentralen Speichereinrichtung SP bzw. RAM erfolgt, kann als Endgerät der vorhandene Fernsprechapparat Tl...Tn, Te verwendet werden. Der Teilnehmer signalisiert seine Bedienwünsche, wie noch beschrieben wird, insbesondere durch Betätigung von Funktionstasten. In umgekehrter Richtung kann der Teilnehmer aus dem ersten zentralen Speicher SP bzw. RAM entnommene gesprochene Anweisungen (prompts) erhalten.

Zur Beanspruchung der einzelnen Funktionen des Sprachspeichersystems VMS wählt der Teilnehmer, der eine Sprachnachricht für einen anderen Teilnehmer einspeichert, bestimmte Ziffern oder Ziffernkombinationen ein bzw. er betätigt Funktionstasten.

Aufgrund dieser entsprechend der jeweiligen Tastenbetätigung erzeugter Steuerinformationen wird dann der jeweils zugeordnete Funktionsablauf veranlaßt, der durch ein entsprechendes Betriebsprogramm für die dem Sprachspeichersystem VMS zugeordnete Steuerung CVMS definiert ist.

Die ankommenden Sprachinformationen können in der Weise vorbearbeitet sein, daß sie über die Leitungsverbindung Lg als PCM-codierte Signalfolgen anliegen und über die Schnittstelle S weitergegeben werden. Alternativ kann vorgesehen sein, daß über die Leitungsverbindung Lg übertragene analoge Signale im Sprachspeichersystem VMS digitalisiert werden. Die Analog-/Digitalwandlung erfolgt durch die Einheit A/D. Die der Schnittstelle S nachgeordnete Einheit WS wandelt serielle Signale in parallele Signale um. Die Verbindung mit den nachfolgenden Einheiten UN, ADPCM/PCM und SP erfolgt über Leitungsanordnungen, die aus einer der Anzahl der Bits entsprechenden Anzahl von Einzelleitungen bestehen. Derartige Leitungsanordnungen sind in der Figur 1 durch zueinander parallele Verbindungslinien dargestellt. Für die Weiterverarbeitung werden die durch die Einheit WS zur Verfügung gestellten digitalen Informationen, die ursprünglich aufgrund einer der Quantisierung zugrunde liegenden nichtlinearen, im Regelfall logarithmischen Kennlinie gebildet werden, in aufgrund einer linearen Kennlinie abgeleitete Informationen durch die Einheit UN umgesetzt. In der nachgeschalteten Einheit PCM/ADPCM werden die eintreffenden Informationen vorverarbeitet, um den Speicheraufwand, der für die vorgesehene Einspeicherung in der Einheit SP bzw. RAM notwendig ist, zu reduzieren. Eine Möglichkeit dieser Vorverarbeitung besteht beispielsweise darin, die PCM-Signale in sogenannte ADPCM-Signale umzuwandeln. Dieses Vorverarbeitungsverfahren, mit dem digitalisierte Sprach- bzw. Tonsignale komprimiert werden, wird als das adaptive Differenz-PCM-Verfahren bezeichnet. Diese für sich bekannte Vorverarbeitung erfolgt in Abhängigkeit von Steuerinformationen, die von der Steuereinheit CVMS abgegeben werden. Die Steuereinheit CVMS steuert die Abläufe der Einrichtung VMS aufgrund eines entsprechenden Betriebsprogramms. Die Steuerung CVMS steuert zudem die Vorgänge im Zusammenhang mit dem Ein- und Ausspeichern der Sprachnachrichten in und aus der Speichereinrichtung SP bzw. RAM. Ferner steuert die Einheit CVMS die Einspeicherung von Sprachnachrichten begleitenden Informationen, wie beispielsweise von Informationen, die die Identität des die Nachricht absendenden Teilnehmers oder den Zeitpunkt des Absendens bezeichnen.

Als Eingangsinformation für das Sprachverarbeitungs- und Speichersystem VMS kann ein Informationsfluß zur Verfügung stehen, in dem neben den Sprachinformationen auch Steuerinformationen enthalten sind. Diese Steuerinformationen bestehen aus MFV-Zeichen, die von einer analogen Teilnehmerendeinrichtung gebildet worden sind. Dagegen bestehen in einem ISDN-Kommunikationssystem die Steuerinformationen aus Bitfolgen, die logische Protokollelemente darstellen und in diesem System in dem D-Kanal der Steuerung CVMS übermittelt werden, die eine entsprechende D-Kanal-Verbindung über die Schnittstelle S zum Vermittlungsrechner CC aufweist. Mit diesen Steuerinformationen kann ein Teilnehmer des Kommunikationssystems beim Erstellen der Sprachmitteilung die Ansteuerung der Einrichtung VMS bewirken und diese Sprachinformationen in unterschiedlicher Weise bearbeiten, beispielsweise editieren (Start/Stop, wiederholen, wiedergeben usw.). Zu diesem Zweck werden bei in Analogtechnik aufgebauten Teilnehmerendeinrichtungen auch Steuerinformationen (insbesondere MFV-Zeichen) zwischen den Sprachinformationen abgesetzt. Die mit der Schnittstelle S verbundene Steuereinheit CVMS identifiziert die eintreffenden Informationen entweder als Sprachinformationen oder als Steuerinformationen. Erkennt die Steuereinheit CVMS eine Steuerinformation, so unterbindet sie während der Zeit, in der eine solche Steuerinformation auftritt, deren Einspeicherung in die Speichereinheit SP bzw. RAM. Die entsprechenden Prozeduren sind aus dem Europäischen Patent mit der Veröffentlichungsnummer 0 193 764 bekannt.

Die Steuerinformationen werden wie schon erwähnt beispielsweise als sogenannte MFV (Mehrfrequenzverfahren)-Zeichen von den Endeinrichtungen Tl...Tn, Te übermittelt, sofern diese in Analogtechnik aufgebaut sind, und von einem im Sprachspeichersystem VMS angeordneten MFV-Empfänger RMFV empfangen, der mit der Steuereinheit CVMS verbunden ist.

Auch bei der Ausspeicherung der Nachricht aus der Speichereinheit SP bzw. RAM werden von den hierzu berechtigten Teilnehmern zunächst Steuerinformationen übermittelt. Dies sind MFV-Zeichen, sofern die Sprachnachrichten von einem in Analogtechnik aufgebauten Endgerät abgerufen werden. Aufgrund von eingewählten Kennzahlen kann sich beispielsweise der betreffende Teilnehmer gegenüber dem Sprachspeichersystem VMS als berechtigt ausweisen oder er kann den Wunsch nach Wiederholung einer Nachrichtenausgabe signalisieren. Diese Steuerinformationen werden ebenfalls von der Einheit RMFV erkannt und ausgewertet. Die Einheit RMFV bildet eine das Auswerteergebnis bezeichnende Information und übermittelt diese der Steuereinheit CVMS. Die Steuereinheit CVMS steuert auch die Einheit ADPCM/PCM, die die nach dem adaptiven Differenz-PCM-Verfahren in der Speichereinrichtung SP bzw. RAM abgespeicherten Sprachinformationen in PCM-codierte Informationen rückwandelt. Die Einheit UG setzt die aufgrund einer linearen Kennlinie gebildeten digitalen Informationen in Informationen um, denen erneut eine logarithmische Kennlinie zugrundeliegt. Die Einheit WP wandelt die in paralleler Form vorliegenden digitalen Informationen in serielle digitale Informationen um. Im Anschluß daran erfolgt gegebenenfalls eine Digital-/Analog-Wandlung durch die Einheit D/A. Damit stehen an der Schnittstelle S aus der Speichereinheit SP bzw. RAM ausgespeicherte Sprachnachrichten zur Verfügung, die über die Nebenstelle NA beispielsweise zu der Teilnehmerstelle Te der Vermittlungsanlage A oder zu einem weiteren Kommunikationssystem NA' übermittelt werden.

Bei der Ein- und Ausspeicherung von Sprachnachrichten in bzw. aus den Sprachspeichersystemen VMS stehen der Bedienperson beispielsweise folgende Funktionen zur Verfügung, die durch Wahl der im folgenden ebenfalls angegebenen Ziffern bzw. Zeichen ausgelöst werden können: "1 Nachrichtenaufnahme beginnen/beenden", "3 Nachrichtenwiedergabe beginnen/beenden", "4 Rücklauf 10 Sekunden", "44 Rücklauf zum Anfang", "6 Vorlauf 10 Sekunden", "66 Vorlauf zum Ende", "# Nachricht löschen", "* Blättern in Infobox oder Eingabe abschließen (Adresse, Code-Nummer)/Funktion beenden" und "0 * Funktion abbrechen und zur Funktionsauswahl zurückkehren". Dabei erfolgt die Bedienerführung durch Sprachansagen (prompts) und/oder durch sogenannte positive oder negative Hinweis- oder Quittungstöne. Ein positiver Quittungston oder Bestätigungston besteht beispielsweise aus einem einmaligen 3,5 Sekunden langen Dauerton mit der Frequenz 425 Hz (Piepton), während ein negativer Quittungston oder Ablehnungston durch einen 3,5 Sekunden langen Besetztton (Frequenz: 425 Hz; Impuls/Pause = 170 ms/430 ms) oder durch drei Pieptöne gebildet wird.

Während beim Stand der Technik die positiven und negativen Bedienerführungs-Hinweistöne durch eine eigenständige Hardware-Einheit, eine Tongeneratoreinrichtung, gebildet werden, weist ein Kommunikationssystem gemäß der Erfindung keine derartige Hardware-Einheit auf. Vielmehr sind die Hinweistöne, insbesondere in digitaler Form in der Speichereinheit SP oder in einem anderen Speicher, insbesondere in einem der Steuereinheit CVMS zugeordneten Arbeitsspeicher RAM unter vorbestimmten Adressen abgespeichert. Die Steuerung CVMS steuert, wenn einer Endeinrichtung Tl...Tn, Te ein positiver bzw. ein negativer Hinweiston zu übermitteln ist, anstelle des nicht vorgesehenen Tongenerators erfindungsgemäß den adressierten Speicherplatz in der Speichereinrichtung SP bzw. RAM an, in der die jeweiligen Hinweistonsignale abgespeichert sind, ruft diese aus dem Speicher SP bzw. RAM ab und übermittelt sie an die jeweilige Endeinrichtung, ein internes Endgerät Tl...Tn oder ein externes Endgerät Te.

Die Hinweistonsignale können in komprimierter Form abgespeichert sein. Die Hinweistöne werden beispielsweise in analoger Form über ein internes Endgerät Tl...Tn eingegeben und über die Nebenstellenanlage NA der Speichereinheit SP im Sprachspeichersystem VMS zugeführt und dort abgespeichert. Die Hinweistöne werden in diesem Fall wie ebenfalls abzuspeichernde Sprachnachrichten behandelt und durchlaufen die Einheiten S, WS, UN und PCM/ADPCM, bevor sie in die Speichereinheit SP eingespeichert und gegebenenfalls in den Arbeitsspeicher RAM übertragen werden.

Ergibt sich aufgrund einer bedienerseitigen Eingabe durch Wahl einer Ziffer bzw. eines Sonderzeichens, daß der Bedienperson an einem internen oder externen Endgerät ein positiver oder ein negativer Hinweiston zu übermitteln ist, ruft die Steuereinheit CVMS die entsprechenden Signale aus der Speichereinheit SP bzw. RAM ab, die dort in digitaler, komprimierter Form abgespeichert sind. Die abgerufenen Informationen durchlaufen ebenso wie abgerufene Sprachnachrichten die Einheiten ADPCM/PCM, UG, WP und S und gelangen über die Leitungsverbindung LG zu der jeweiligen Teilnehmerendeinrichtung.

Zum Zugriff auf die in der Speichereinheit SP bzw. RAM unter vorbestimmten Adressen abgespeicherten Hinweistonsignale greift die Steuereinheit CVMS auf eine entsprechende, in der Figur 1 nicht dargestellte Tabelle zurück, in der die Zuordnung zwischen Speicherplatzadresse und Hinweistonsignalen abgespeichert ist.

Die Hinweistonsignale können jedoch anders als die Nutzdaten auch in nichtkomprimierter Form in dem Speicher SP bzw. RAM abgelegt sein. In diesem Fall schaltet die Steuereinheit CVMS bei der erstmaligen Eingabe (Aufzeichnung) die Einheit PCM/ADPCM ab und bei jeder Ausgabe schaltet die Steuereinheit CVMS die Einheit ADPCM/PCM ab. Die nichtkomprimierte Abspeicherung der Hinweistonsignale verbessert die Wiedergabequalität der Hinweistöne gegenüber der Wiedergabequalität bei der komprimierten Abspeicherung. "Nichtkomprimiert" bedeutet in diesem Zusammenhang, daß für Hinweistonsignale (und für die später beschriebenen Nachrichtenaustauschprotokoll-Steuerinformationssignale) beispielsweise eine nach dem Abtasttheorem entsprechende Anzahl von Abtastwerten pro Zeiteinheit, z.B. 64 KBit/sec, gebildet wird. Dagegen wird bei der Kompression der Sprachnachrichten eine geringere Anzahl von Abtastwerten pro Zeiteinheit, z.B. 32 KBit/sec, beispielsweise nach dem ADPCM-Verfahren, gebildet.

Die digitalen Hinweistonsignalwerte können jedoch auch auf einem anderen Wege erzeugt und in die vorbestimmten Speicherbereiche (SP, RAM) eingebracht werden. Ausgehend von einmal vorhandenen digitalen Hinweistonsignalen, die auf dem zuvor beschriebenen Weg erzeugt werden, übernimmt der Hersteller die vorhandenen digitalen Hinweistonsignale und kopiert diese vor oder bei der Erstinbetriebnahme eines Sprachspeichersystems VMS in die vorgesehenen Speicher SP bzw. RAM. Die zu übernehmenden digitalen Hinweistonsignale können alternativ hierzu auch synthetisch in an sich aus dem Bereich der synthetisch erzeugten Musik bekannten Weise erzeugt werden, wobei die hier zu bildenden digitalen Hinweistonsignale in systemkonformer Weise in PCM-Codierung zu bilden sind.

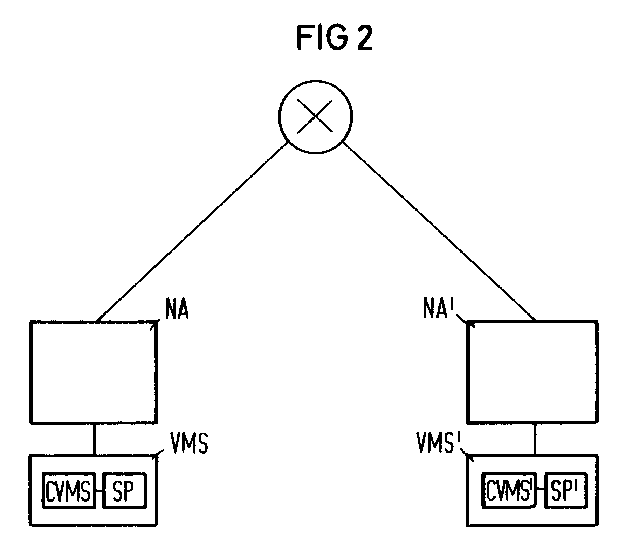

Figur 2 zeigt zwei Kommunikationssysteme NA, NA', die beispielsweise über das öffentliche Telefonnetz miteinander verbindbar sind. Jedes Kommunikationssystem weist ein Sprachspeichersystem VMS bzw. VMS' auf, das jeweils eine Steuerung CMS bzw. CVMS' und einen zentralen Speicher SP bzw. SP' enthält. Anstelle der Sprachspeichersysteme VMS, VMS' können auch sonstige Nachrichtenspeichersysteme beispielsweise Speichersysteme zur Aufnahme von Fax-Nachrichten vorgesehen sein. Diese sonstigen Nachrichtenspeichersysteme sind grundsätzlich wie die Sprachspeichersysteme VMS, VMS', allerdings ohne die sprachspezifischen Einheiten WS, UN, PCM/ADPCM, ADPCM/PCM, UG und WP aufgebaut. Im folgenden wird davon ausgegangen, daß Nutzdaten zwischen den Kommunikationssystemen NA, NA' ausgetauscht werden.

In der Speichereinheit SP bzw. RAM des Sprachspeichersystems VMS oder eines sonstigen Nachrichtenspeichersystems können neben oder alternativ hierzu anstatt der zuvor beschriebenen Hinweistöne, die der Bedienerführung dienen, MFV-Zeichen abgespeichert sein, die jedoch nicht der Bedienerführung dienen, sondern Nachrichtenaustauschprotokoll-Steuerinformationssignale darstellen, die dazu dienen, Sprachinformationen oder sonstige Nachrichten (z.B. Fax), die in einer Speichereinrichtung SP eines ersten Kommunikationssystems NA abgespeichert sind, an eine Speichereinheit SP' eines zweiten Kommunikationssystems NA' zu übermitteln, das mit dem ersten Kommunikationssystem NA vernetzt ist.

Eine derartige Übermittlung von Sprachinformationen aus einer Speichereinrichtung SP eines ersten Kommunikationssystems NA zu einer Speichereinheit SP' eines zweiten Kommunikationssystems NA', gegebenenfalls über das öffentliche Netz, ist bekannt. Die Sprachinformationseinheiten SP, SP' in Verbindung mit rechnergesteuerten Kommunikationssystemen NA, NA' werden zur Zeit über analoge und zukünftig über digitale Netze zum Zwecke des Nachrichteninformationsaustausches miteinander verbunden. Die Abwicklung eines derartigen Nachrichteninformationsaustausches erfolgt mit Hilfe von vereinbarten Nachrichtenaustauschprotokollen. Ein solches Nachrichtenaustauschprotokoll ist durch "Audio Messaging Interchange Specification (AMIS), Analog Protocol, Version 1, February 1990, 12/15/89 Final Draft" definiert. Dabei sind z.B. sogenannte DTMF (Dualton Multifrequency)-Tonsignale vorgesehen, mit denen beispielsweise Sitzungen eröffnet und beendet, Quittungen gegeben/Absender-Adressen ausgetauscht werden. Anstelle einer üblicherweise vorgesehenen Hardware-Einrichtung, die die erforderlichen MFV- oder DTMF-Tonsignale erzeugt, werden diese Tonsignale, die Nachrichtenaustauschprotokoll-Steuerinformationssignale darstellen, bei dem Kommunikationssystem gemäß der Erfindung in der Speichereinrichtung SP bzw. im Speicher RAM des Sprachspeichersystems VMS abgespeichert und wie zuvor im Zusammenhang mit den Hinweistönen beschrieben wie abzuspeichernde bzw. abzurufende Nachrichten behandelt. Bei der Erzeugung dieser MFV- bzw. der DTMF-Tonsignale werden diese zunächst in analoger Form beispielsweise in ein internes Endgerät Tn eingegeben oder in der zuvor im Zusammenhang mit Hinweistönen beschriebenen Weise synthetisch erzeugt. Im erstgenannten Fall durchlaufen die angegebenen Tonsignale auf dem Weg zu der Speichereinrichtung SP die Einheiten S, WS, UN und PCM/ADPCM. Nach dem Abruf der Tonsignale durchlaufen diese die Einheiten ADPCM/PCM, UG, WP und S. Die entsprechenden Vorgänge werden durch die Steuereinheit CVMS in der zuvorbeschriebenen Weise gesteuert. Die Einheit RMFV erkennt die eintreffenden MFV- bzw. DTMF-Tonsignale, die Nachrichtenaustauschprotokoll-Steuerinformationssignale darstellen, wertet diese aus und übermittelt der Steuereinheit CVMS Auswerteergebnisse bezeichnende Informationen.

Das Betriebsprogramm der Steuereinheit CVMS ist beispielsweise entsprechend den in der zuvorgenannten amerikanischen Spezifikation AMIS enthaltenen Vorgaben ausgestaltet und wickelt den gesamten Dialog mit der Steuereinheit CVMS' des korrespondierenden Kommunikationssystems NA' ab.

Ein solcher Dialog zwischen zwei Kommunikationssystemen NA, NA' mit zentralen Speichern SP, SP', die der Aufnahme von Sprach- oder sonstigen Nachrichteninformationen (Fax, Text) dienen, wird beispielsweise durch einen an sich bekannten Rundsendeauftrag ausgelöst, der in ein erstes Kommunikationssystem NA eingegeben wird. Die zugehörige Steuereinheit CVMS greift hierzu auf ein Adreßregister zu, in dem die Zuordnung zwischen den im Rundsendeauftrag angegebenen Informationen (Rufnummern der B-Teilnehmer) und der Rufnummer des Speichersystems (Kommunikationssystem NA') enthalten ist. Nachdem die Verbindung zwischen beiden Systemen NA, NA' hergestellt ist, ruft die Steuereinheit CVMS des Systems NA die abgespeicherten MFV'- bzw. DTMF-Nachrichtenaustauschprotokoll-Steuerinformationssignale aus dem Speicher SP für die Abwicklung des Protokolls (Verständigungsphase Dialog) ab und übermittelt dies der Steuereinheit CVMS' des korrespondierenden Systems NA'.

Erfindungsgemäß ist weiter vorgesehen, daß der Steuerung CC, (Figur 1) des Kommunikationssystems NA anstelle eines Generators ein zweiter zentraler Speicher SIU zugeordnet ist, der eine Hörtoneinrichtung bildet. In diesem zweiten zentralen Speicher SIU sind Hörtöne darstellende Signale insbesondere in PCM-kodierter Form abgespeichert. Zu diesen Hörtönen gehören unter anderem interne Ruftöne, Besetzttöne, Sondertöne und Sonderruftöne.

Diese Hörtonsignale werden erfindungsgemäß wie die Hinweistonsignale und wie die Nachrichtenaustauschprotokoll-Steuerinformationssignale erzeugt, abgespeichert, verwaltet und abgerufen. Die Hörtöne werden entsprechend dem jeweiligen vermittlungstechnischen Zustand von der zentralen Steuerung CC des Kommunikationssystems NA zur Ausgabe an den entsprechenden Satz VA1, VA2, VSl, ... VSn, VSx ausgegeben.

## Patentansprüche

1. Kommunikationssystem (NA), insbesondere Fernsprechkommunikationssystem, mit einer Steuerung (CC, CVMS) mit einem ersten zentralen Speicher (SP, RAM) zur Aufnahme von Nachrichten einschließlich über Endgeräte (Tl ... Tn, Te) eingebbarer Sprachnachrichten und mit einer Toneinrichtung, die Bedienerführungs-Hinweistonsignale und/oder Nachrichtenaustauschprotokoll-Steuerinformationssignale bildet, die die Steuerung (CC, CVMS) von der Toneinrichtung abruft und an interne Endgeräte (Tl ... Tn) des Kommunikationssystems (NA), an externe Endgeräte (Te) oder an zentrale Einrichtungen (SP') eines weiteren Kommunikationssystems (NA') übermittelt**, dadurch gekennzeichnet,** daß der erste zentrale Speicher (SP, RAM) die Toneinrichtung bildet, und Hinweistonsignale und/oder Nachrichtenaustauschprotokoll-Steuerinformationssignale enthält, die wie die Sprachnachrichten in den ersten zentralen Speicher (SP, RAM) abspeicherbar, von der Steuerung wie die im ersten zentralen Speicher (SP, RAM) abgespeicherten Sprachnachrichten abrufbar und an die internen Endgeräte (Tl ... Tn), die externen Endgeräte (Te) oder an die zentralen Einrichtungen (SP') des weiteren Kommunikationssystems (NA') übermittelbar sind.

2. Kommunikationssystem nach Anspruch 1, **dadurch gekennzeichnet,** daß die im ersten zentralen Speicher (SP, RAM) abgespeicherten Nachrichten in komprimierter Form und die im ersten zentralen Speicher (SP, RAM) abgespeicherten Hinweistonsignale oder Nachrichtenaustauschprotokoll-Steuerinformationssignale in nichtkomprimierter Form abgespeichert sind.

3. Kommunikationssystem nach einem der vorstehenden Ansprüche, **dadurch gekennzeichnet,** daß der Steuerung (CC) des Kommunikationssystems (NA) ein zweiter zentraler Speicher (SIU') zugeordnet ist, der eine Hörtoneinrichtung bildet und in dem Hörtöne (interne Ruftöne, Besetzttöne, Sondertöne, Sonderruftöne) darstellende Signale abgespeichert sind.

## Claims

1. A communications system (NA), especially a telephone communications system, comprising a controller (CC, CVMS) with a first central memory (SP, RAM) for storing messages, including voice messages which can be input via terminals (T1 ... Tn, Te) and with a tone device which forms operator guidance intercept tone signals and/or message exchange protocol control information signals which are retrieved by the controller (CC, CVMS) from the tone device and are transmitted to internal terminals (T1 ... Tn) of the communications system (NA), to external terminals (Te) or to central devices (SP') of another communications system (NA'), characterised in that the first central memory (SP, RAM) forms the tone device and contains intercept tone signals and/or message exchange protocol control information signals which, like the voice messages, can be stored in the first central memory (SP, RAM), can be retrieved by the controller like the voice messages stored in the first central memory (SP, RAM) and can be transmitted to the internal terminals (T1 ... Tn), the external terminals (Te) or to the central devices (SP') of the other communications system (NA').

2. Communications system according to Claim 1, characterised in that the messages stored in the first central memory (SP, RAM) are stored in compressed form and the intercept tone signals or message exchange protocol control information signals stored in the first central memory (SP, RAM) are stored in uncompressed form.

3. Communications system according to one of the preceding claims. characterised in that the controller (CC) of the communications system (NA) is associated with a second central memory (SIU') which forms a call-progress tone device and in which signals representing call progress tones (internal ringing tones, busy tones, special tones, special ringing tones) are stored.

## Revendications

1. Système de communication (NA), notamment système de télécommunication, comportant une commande (CC, CVMS) comprenant une première mémoire centrale (SP, RAM) pour la réception de messages, y compris des messages vocaux susceptibles d'être enregistrés par l'intermédiaire de terminaux (Tl ... Tn, Te), et comportant un dispositif de tonalité qui forme des signaux de tonalité d'information pour le guidage de l'usager et/ou des signaux d'information de commande pour le protocole d'échange de messages, signaux que la commande (CC, CVMS) appelle à partir du dispositif de tonalité et communique à des terminaux internes (T1 ... Tn) du système de communication (NA), à des terminaux externes (Te) ou à des dispositifs centraux (SP') d'un autre système de communication (NA'), caractérisé en ce que la première mémoire centrale (SP, RAM) forme le dispositif de tonalité, et comprend des signaux de tonalité d'information et/ou les signaux d'information de commande pour le protocole d'échange de messages, qui sont susceptibles d'être mémorisés comme les messages vocaux dans la première mémoire centrale (SP, RAM), qui sont susceptibles d'être appelés par la commande comme les messages vocaux mémorisés dans la première mémoire centrale (SP, RAM), et qui sont susceptibles d'être transmis aux terminaux internes (T1 ... Tn), aux terminaux externes (Te) ou aux dispositifs centraux (SP') dudit autre système de communication (NA').

2. Système de communication selon la revendication 1, caractérisé en ce que les messages mémorisés dans la première mémoire centrale (SP, RAM) sont mémorisés sous une forme comprimée, et les signaux de tonalité d'information ou les signaux d'information de commande pour le protocole d'échange de messages, qui sont mémorisés dans la première mémoire centrale (SP, RAM), sont mémorisés sous une forme non comprimée.

3. Système de communication selon l'une des revendications précédentes, caractérisé en ce que, à la commande (CC) du système de communication (NA), est associée une seconde mémoire centrale (SIU') qui forme un dispositif de tonalité et dans laquelle sont mémorisés des signaux de tonalité (tonalités d'appel interne, tonalité d'occupation, tonalité spéciale, tonalité spéciale de retour d'appel).
